# EUROPEAN PATENT SPECIFICATION

(11) **EP 2 076 356 B1**
(45) Date of publication and mention of the grant of the patent: **21.04.2010**
(21) Application number: 07736817.3
(22) Date of filing: 30.04.2007
(51) Int. Cl.: B23Q 1/62, B23Q 11/00, B23Q 17/22

(54) **MOBILE GROUP COMPRISING A TRAVELLING SUPPORT, A SPINDLE CARRIER AND A SPINDLE OF A MACHINE-TOOL PROVIDED WITH THERMAL DEFORMATIONS DETECTING OF THE SPINDLE CARRIER**
MOBILE GRUPPE MIT EINEM BEWEGLICHEN TRÄGER, EINEM SPINDELTRÄGER UND EINER SPINDEL EINER WERKZEUGMASCHINE, DIE MIT WÄRMEVERFORMUNGSERFASSUNG DES SPINDELTRÄGERS VERSEHEN IST
GROUPE MOBILE COMPRENANT UN SUPPORT ROULANT, UN CHARIOT PORTE-BROCHE ET UNE BROCHE D'UNE MACHINE-OUTIL COMPORTANT UN DISPOSITIF DE DÉTECTION DES DÉFORMATIONS THERMIQUES DU CHARIOT PORTE-BROCHE

(30) Priority: 06.10.2006 IT MI20061926
(43) Date of publication of application: 08.07.2009
(73) Proprietor: Camozzi Machine Tools S.p.A., 25126 Brescia (IT)
(72) Inventor: GOFFRINI, Roberto, 25124 Brescia (IT)
(74) Representative: Pulieri, Gianluca Antonio
(86) International application number: PCT/IT2007/000314
(87) International publication number: WO 2008/041256

(56) References cited:
- US-A- 3 581 553
- US-A- 5 315 526

## Description

The object of the present invention is a spindle carrier of a machine tool provided with a device for detecting the deformations.

In the field of machine tools, especially of large dimensions, the need of manufacturing a mechanical part with increasingly smaller processing tolerances is strongly felt by the users. Such need affects the manufacturers of such machines, which carry out considerable research and development efforts to offer machines with increasingly better performance.

The extent of the processing tolerances that can be obtained for a mechanical part is strongly affected by the thermal and mechanical deformations undergone by the machine support parts, which support a processing tool in a desired position in space.

Generally, a machine comprises a main guide and a mobile group consisting of a travelling support, sliding on such guide, a spindle carrier, sliding transversal to the travelling support, a spindle, sliding parallel to the spindle carrier and suitable for rotating around its axis of rotation, and a tool holder, which is connectable to a processing tool, arranged at the front end of the spindle.

While the main guide, especially for large sized machines, exhibits systems for compensating the deformations so far deemed as reliable, the mobile group at present does not exhibit as much effective systems for remedying the deformations of a thermal nature that characterise such zone. Several solutions of devices for detecting the deformations undergone by the support parts of a machine-tool exist.
US-3,581,553 discloses a spindle-carrier with detection means for measuring the thermal deformation of the spindle-carrier.

The object of the present invention is to improve the devices currently known, making them such as to detect the thermal deformations occurred with greater reliability.

Such object is achieved by a spindle carrier obtained according to claim 1. The dependent claims describe embodiment variations.

The features and advantages of the spindle carrier according to the present invention will appear more clearly from the following description, made by way of an indicative and non-limiting example with reference to the following figures, wherein:

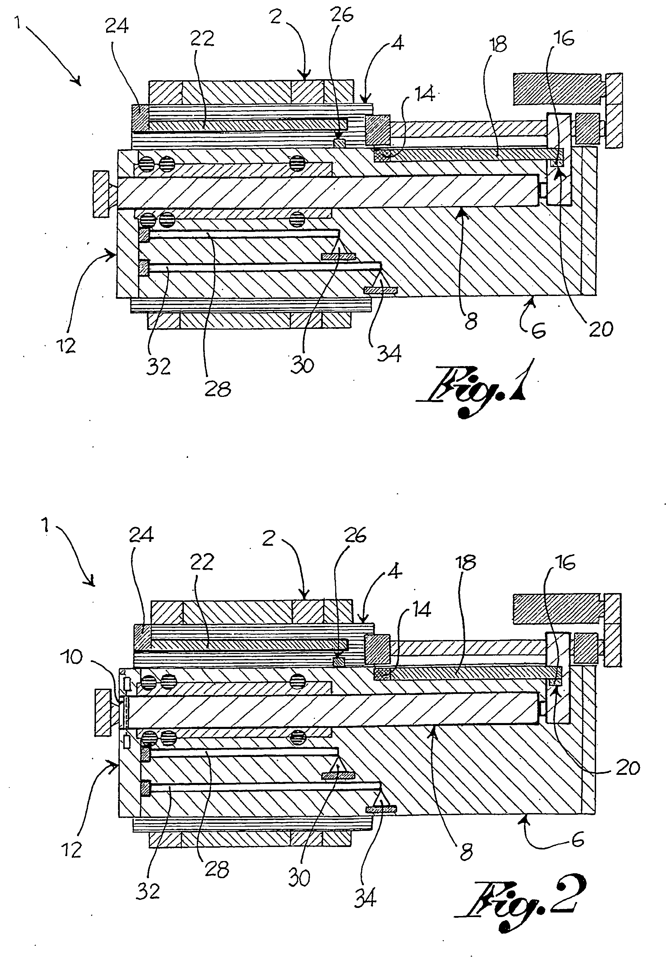

- figure 1 shows a schematic view of a machine tool comprising a spindle carrier according to an embodiment variation of the present invention; and

- figure 2 shows a diagram of a further machine tool, comprising a spindle carrier according to a further embodiment variation of the present invention.

With reference to the annexed figures, reference numeral 1 globally denotes a machine tool.

According to a preferred embodiment, machine 1 comprises a fixed guide 2, which extends along a prevailing longitudinal direction, for example vertical, that is, perpendicular to the ground surface the machine rests on.

Moreover, machine 1 comprises a mobile group, associated to guide 2. The mobile group can be moved at least along said longitudinal direction of guide 2 and comprises a travelling support 4, operatively connected to the guide for shifting along said longitudinal direction, and a spindle carrier-spindle unit, supported by travelling support 4 and integral in shifting therewith.

The spindle carrier-spindle unit, associated to travelling support 4, comprises a spindle carrier 6, in jargon called "ram", and a spindle 8.

Spindle carrier 6 is supported by travelling support 4 and operatively connected thereto so as to shift relative to said travelling support along an axial direction, perpendicular to the longitudinal direction along which travelling support 4 can shift relative to guide 2.

In particular, spindle carrier 6 is suitable for shifting between a retracted position and an extended position, suitable for executing a process on a mechanical part, wherein spindle carrier 6 protrudes more at the front from travelling support 4 as compared to the retracted position.

Spindle carrier 6 exhibits an inner space open at the front through a spindle carrier opening.

Moreover, the spindle carrier-spindle unit comprises a spindle 8, at least partly seated in the spindle carrier space.

Spindle 8 is supported by spindle carrier 6 so as to rotate about an axis of rotation thereof and so as to shift relative to spindle carrier 6 along said axial direction.

In particular, spindle 8 is suitable for shifting between a retracted position and an extended position, suitable for executing a process on a mechanical part, wherein it protrudes at the front from spindle carrier 6 through said spindle carrier opening more than in said retracted position.

Spindle 8 comprises a signalling element 10, integral in shifting with the spindle, arranged in the proximity of the front end of said spindle.

In other words, the signalling element is arranged, depending on the minimum structural dimensions that characterise it, close to the tool holder usually connected to the front end of the spindle.

For example, said signalling element 10 is made of a hole or a groove into the spindle or an obstacle wall protruding from the spindle.

According to an embodiment variation, the spindle carrier-spindle unit comprises a spindle carrier cover 12, in jargon called "dummy cover", associable at the front with spindle carrier 6 for covering, at least partly, said spindle carrier opening allowing in any case the shifting of spindle 8.

The spindle carrier cover 12 is removably associable to spindle carrier 6.

In particular, when the use of spindle 8 is required to execute a mechanical process, cover 12 is associated to the spindle carrier, especially for protecting the interface systems for machine accessories (for example square heads, universal heads, etc.). When the spindle on the other hand is not used, cover 12 is removed from spindle carrier 6 and a processing accessory is associated to the front thereof, for example a milling head.

The spindle carrier-spindle unit comprises detection means suitable for detecting the axial positioning of a fixed point of the spindle in predetermined reference position.

For example, said detection means are attached to the spindle carrier cover 12 and are suitable for detecting the position of the signalling element 10 of the spindle, for assessing the thermal deformation of the spindle.

For example, the detection means comprise a laser device suitable for emitting a laser beam for detecting the position of the signalling element 10.

According to an embodiment variation, the detection means comprise a switch suitable for opening or closing when influenced by the signalling element 10.

According to a further variation of embodiment, said detection means comprise a proximeter for detecting the position of the signalling element.

According to a preferred embodiment, said mobile group comprises means for detecting the deformation of cover suitable for detecting the thermal deformation optionally undergone by cover 12.

For example, said means for detecting the deformation of the cover comprise a thermal probe or a cover bar made of a substantially thermally non-deformable material, for example Invar^{®}. In the following description, two typical states of the machine shall often be referred to: the "cold" state, which characterises the machine after a more or less long standstill machine period and wherein the machine substantially exhibits same dimensions as the project ones, and the "hot state" which characterises the machine after a warming cycle, usually carried out after the standstill period and before a process, or after the execution of a process, wherein the machine exhibits deformed dimensions as compared to project ones, especially due to the thermal deformations occurred.

Moreover, it should be noted that the retracted spindle position is defined through said detection means.

In other words, when said detection means detect the presence of a fixed point of the spindle in a predetermined reference position, the position the spindle has at the time of said signalling is defined as retracted spindle position.

In yet other words, when the hot spindle is moved to the retracted position, the detection means detect the position of the signalling element 10 of the spindle, advantageously arranged in the proximity of the front end of said spindle.

Said cover 12 and said detection means, cooperating with the signalling element arranged on the spindle make up a device for detecting and consequently compensating the thermal deformation of the spindle.

Moreover, the spindle carrier-spindle unit comprises first measurement means suitable for measuring the axial advancement of spindle 8 between a fixed reference position 14 on spindle carrier 6 and a moving reference 16, moving relative to spindle carrier 6 and integral in shifting to spindle 8.

According to a preferred embodiment, said measurement means comprise:

- a first optical rule 18 integral in shifting with spindle carrier 6 and fixed to said spindle carrier in a position of rule for spindle, which makes up said fixed reference position 14 on the spindle carrier, and

- a first rule sensor 20, integral in rotation to spindle 8 and suitable for cooperating with said first optical rule 18 for detecting the axial advancement of the spindle.

In the standard operation of machine 1, while spindle 8 is shifting, the position taken by the first rule sensor 20 is detected by the optical rule 18, thus providing a measurement of the axial advancement of the spindle relative to the spindle carrier. A feedback control allows axially positioning the spindle according to the needs.

The mobile group comprises second measurement means suitable for measuring the axial advancement of spindle carrier 6 relative to travelling support 4.

According to a preferred embodiment, said second measurement means comprise:

- a second optical rule 22 integral in shifting to travelling support 4 and fixed to said travelling support in a position of rule for spindle carrier 24, and

- a second rule sensor 26, integral in rotation to spindle carrier 6, suitable for cooperating with said second optical rule 22 for detecting the axial advancement of the spindle carrier relative to the travelling support.

A feedback control allows axially positioning the spindle carrier according to the needs.

In the standard operation of machine 1, while spindle carrier 6 is shifting, the position taken by the second rule sensor 26 is detected by the optical rule 22, thus providing a measurement of the axial advancement of spindle carrier 6 relative to travelling support 4.

The retracted spindle carrier position is defined through said second measurement means. When the spindle carrier is fully retracted, the rule indicates the maximum spindle carrier stroke; when the spindle carrier is fully forward the rule indicates "zero" and this also corresponds to the rule zero. Moreover, the mobile group comprises second detection means suitable for detecting the thermal deformation of spindle carrier 6.

According to a preferred embodiment, said second detection means comprise a bar 28 of a substantially thermally non-deformable material.

The term "substantially thermally non-deformable" material indicates a material for which the thermal expansion coefficient is much lower than that of the material the spindle carrier is made of, for example lower than one tenth of the latter. For example, bar 28 is made of Invar^{®}.

Bar 28 mainly extends in axial direction, between a front end, fixed to the spindle carrier in the proximity of the front end thereof, and a back end.

When cold, the back end of bar 28 is aligned with the position of the second rule sensor 26 of the means for measuring the spindle carrier advancement.

Moreover, said second detection means comprise a bar sensor 30, integral to spindle carrier 6 and suitable for detecting the axial distance of the back end of bar 28.

In the standard operation, during the processing steps, the second detection means continuously detect the hot distance between the back end of bar 28 and the bar sensor 30. Based on such detections, the thermal deformation undergone by the spindle carrier is defined and the compensation thereof can thus be carried out.

The fixing position of the second rule sensor 26 is axially spaced from said rule position for spindle 14.

Advantageously, the mobile group comprises further detection means suitable for detecting the thermal deformation of the spindle carrier between the fixing position of the second rule sensor 26 and the rule position for spindle 14.

Said further detection means are separate and independent of said second detection means.

Said further detection means comprise a further bar 32 of substantially thermally non-deformable material, for example Invar^{®}.

The further detection means further comprise a bar sensor 34, integral to spindle carrier 6 and suitable for detecting the axial distance of said back end of the further bar 32.

When cold, the back end of the further bar 32 is aligned with the rule position for spindle 14. When hot, on the other hand, spindle carrier 6 has undergone a thermal deformation and the back end of the further bar 32 exhibits an axial distance from the rule position for spindle 14.

During the usual processing steps:

- the second detection means continuously detect the back end of the first bar 28 and the fixing position of the second rule sensor 26;

- the further detection means detect the distance between the back end of the further bar 32 and the rule position for spindle 14 thus allowing excellent overall detection of the deformations occurred in the mobile group.

Innovatively, the spindle carrier described above allows detecting the overall thermal deformation undergone thereby in a very effective manner.

Advantageously, moreover, the spindle carrier can also be coupled to known devices for detecting the thermal deformation of a spindle.

It is clear that a man skilled in the art can make changes and variations to the spindle carrier described above, as defined in the following claims.

## Claims

1. Mobile group of a machine tool comprising:
- a travelling support (4) associable to a fixed guide (2) movable along a longitudinal direction of said fixed guide;
- a spindle carrier (6) movable along an axial direction perpendicular to said longitudinal direction, having an inner spindle carrier space open on a front surface thereof through a spindle carrier opening,
- a spindle (8), at least partly seated in said spindle carrier space and supported for rotating about an axis of rotation, said spindle being operatively connected to the spindle carrier so as to shift along said axial direction between a retracted position and an extended position, suitable for executing a process, wherein it protrudes at the front from the spindle carrier through said spindle carrier opening more than in said retracted position;
- first measurement means (18) suitable for measuring the axial advancement of the spindle relative to the spindle carrier, between a fixed reference position (14) on the spindle carrier and a moving reference relative to the spindle carrier and integral in shifting to the spindle;
- second measurement means (22) suitable for measuring the axial advancement of the spindle carrier relative to the travelling support, between a fixed reference position (24) on the travelling support and a moving reference (26) relative to the travelling support and integral in shifting to the spindle carrier;
- second detection means (28) suitable for measuring the thermal deformation of the spindle carrier between said front surface of the spindle carrier and said moving reference (26) relative to the travelling support and integral in shifting to the spindle carrier;
said mobile group being **characterised in that** it further comprises,
further detection means suitable for measuring the thermal deformation of the spindle carrier, between said front surface of the spindle carrier and said fixed reference position (14) on the spindle carrier.

2. Mobile group according to claim 1, wherein said further detection means comprise:
a further bar (32) of substantially thermally non-deformable material which mainly extends in axial direction, between a front end, fixed to the spindle carrier in the proximity of the front end thereof, and a back end, and
- a further sensor (34), integral to the spindle carrier and suitable for detecting the axial distance of said back end of the bar.

3. Mobile group according to claim 2, wherein said back end of the further bar is aligned with said fixed reference position of the first means for measuring the spindle advancement.

4. Mobile group according to claim 2 or 3, wherein said further bar is made of a material having a thermal expansion coefficient lower than the thermal expansion coefficient of the material the spindle carrier is made of.

5. Mobile group according to claim 4, wherein said thermal expansion coefficient of the material of the further bar is less than one tenth of the thermal expansion coefficient of the spindle carrier material.

6. Mobile group according to claim 5, wherein said component material of the further bar is Invar®.

7. Mobile group according to any one of the previous claims, wherein said second detection means comprise:
a bar (28) of substantially thermally non-deformable material which mainly extends in axial direction, between a front end, fixed to the spindle carrier in the proximity of the front end thereof, and a back end, and
- a bar sensor (30), integral to the spindle carrier and suitable for detecting the axial distance of said back end of the bar.

8. Mobile group according to any one of the previous claims, wherein said first measurement means comprise:
- a first optical rule (18) integral in shifting with spindle carrier and fixed to said spindle carrier in a position of rule for spindle (14), which makes up said fixed reference position on the spindle carrier, and
- a first rule sensor (20), integral in shifting to the spindle and suitable for cooperating with said first optical rule for detecting the axial advancement of the spindle.

9. Mobile group according to claim 8, wherein said second measurement means comprise:
- a second optical rule (22) integral in shifting to the travelling support and fixed to said travelling support in a position of rule for spindle carrier (24), and
- a second rule sensor (26), integral in rotation to the spindle carrier, suitable for cooperating with said second optical rule for detecting the axial advancement of the spindle carrier.

10. Mobile group according to any one of the previous claims, comprising first detection means suitable for detecting the position of a fixed point of the spindle for determining the thermal deformation of said spindle.

11. Mobile group according to claim 10, comprising a spindle carrier cover (12) removably associable at the front with said spindle carrier for partly covering said spindle carrier opening allowing in any case the shifting of said spindle.

12. Mobile group according to claim 11, comprising means for detecting the deformation of said spindle carrier cover.

13. Machine tool (1) comprising a fixed guide (2) having prevailing extension along a longitudinal direction and a mobile group made according to any one of the previous claims.

## Patentansprüche

1. Mobile Gruppe einer Werkzeugmaschine, die umfasst:
- einen beweglichen Träger (4), der mit einer festen Führung (2) verbindbar ist, der entlang einer Längsrichtung der festen Führung beweglich ist;
- einen Spindelträger (6), der entlang einer Axialrichtung senkrecht zu der Längsrichtung beweglich ist, der einen inneren Spindelträgerraum hat, der auf seiner vorderen Oberfläche durch eine Spindelträgeröffnung offen ist,
- eine Spindel (8), die zumindest teilweise in dem Spindelträgerraum sitzt und für die Rotation um eine Drehachse gehalten wird, wobei die Spindel betriebsfähig mit dem Spindelträger verbunden ist, um sich entlang der Axialrichtung zwischen einer zurückgezogenen Position und einer ausgefahrenen Position, die für die Ausführung eines Verfahrens geeignet ist, zu verschieben, wobei sie auf der Vorderseite durch die Spindelträgeröffnung weiter von dem Spindelträger vorsteht als in der zurückgezogenen Position;
- erste Messmittel (18), die geeignet sind, um das axiale Vorrücken der Spindel relativ zu dem Spindelträger zwischen einer festen Referenzposition (14) auf dem Spindelträger und einer beweglichen Referenz relativ zu dem Spindelträger und fest eingebaut mit der Verschiebung zu der Spindel zu messen;
- zweite Messmittel (22), die geeignet sind, um das axiale Vorrücken des Spindelträgers relativ zu dem beweglichen Träger zwischen einer festen Referenzposition (24) auf dem beweglichen Träger und einer beweglichen Referenz (26) relativ zu dem beweglichen Träger und fest eingebaut mit der Verschiebung zu dem Spindelträger zu messen;
- zweite Erfassungsmittel (28), die geeignet sind, die Wärmeverformung des Spindelträgers zwischen der vorderen Oberfläche des Spindelträgers und der beweglichen Referenz (26) relativ zu dem beweglichen Träger und fest eingebaut mit der Verschiebung zu dem Spindelträger zu messen;
wobei die mobile Gruppe **dadurch gekennzeichnet ist, dass** sie ferner umfasst:
weitere Erfassungsmittel, die geeignet sind, um die Wärmeverformung des Spindelträgers zwischen der vorderen Oberfläche des Spindelträgers und der festen Referenzposition (14) auf dem Spindelträger zu messen.

2. Mobile Gruppe nach Anspruch 1, wobei die weiteren Erfassungsmittel umfassen:
einen weiteren Stab (32) aus im Wesentlichen nicht wärmeverformbarem Material, der sich hauptsächlich in der Axialrichtung zwischen einem vorderen Ende, das in der Nähe dessen vorderen Endes an dem Spindelträger befestigt ist, und einem hinteren Ende erstreckt, und
einen mit dem Spindelträger integrierten weiteren Sensor (34), der geeignet ist, um den axialen Abstand des hinteren Endes des Stabs zu erfassen.

3. Mobile Gruppe nach Anspruch 2, wobei das hintere Ende des weiteren Stabs mit der festen Referenzposition des ersten Mittels zum Messen der Spindelvorrückung ausgerichtet ist.

4. Mobile Gruppe nach Anspruch 2 oder 3, wobei der weitere Stab aus einem Material mit einem Wärmeausdehnungskoeffizienten gefertigt ist, der niedriger als der Wärmeausdehnungskoeffizient des Materials ist, aus dem der Spindelträger gefertigt ist.

5. Mobile Gruppe nach Anspruch 4, wobei der Wärmeausdehnungskoeffizient des Materials des weiteren Stabs weniger als ein Zehntel d e s Wärmeausdehnungskoeffizienten des Spindelträgermaterials ist.

6. Mobile Gruppe nach Anspruch 5, wobei das Bestandteilmaterial des weiteren Stabs Invar® ist.

7. Mobile Gruppe nach einem der vorhergehenden Ansprüche, wobei die zweiten Erfassungsmittel umfassen:
einen Stab (28) aus im Wesentlichem nicht wärmeverformbaren Material, der sich hauptsächlich in der Axialrichtung zwischen einem vorderen Ende, das in der Nähe seines vorderen Endes an dem Spindelträger befestigt ist, und einem hinteren Ende erstreckt, und
einen mit dem Spindelträger integrierten Stabsensor (30), der geeignet ist, um den axialen Abstand des hinteren Endes des Stabs zu erfassen.

8. Mobile Gruppe nach einem der vorhergehenden Ansprüche, wobei die ersten Messmittel umfassen:
- einen mit der Verschiebung des Spindelträgers fest eingebauten ersten optischen Maßstab (18), der an dem Spindelträger in einer Maßstabsposition für die Spindel (14) befestigt ist, welche die feste Referenzposition auf dem Spindelträger bildet, und
- einen ersten Maßstabssensor (20), der mit der Verschiebung zu der Spindel fest eingebaut ist und geeignet ist, mit dem ersten optischen Maßstab zum Erfassen der axialen Vorrückung der Spindel zusammenzuwirken.

9. Mobile Gruppe nach Anspruch 8, wobei die zweiten Messmittel umfassen:
- einen mit der Verschiebung des beweglichen Trägers fest eingebauten zweiten optischen Maßstab (22), der an dem beweglichen Träger in einer Maßstabsposition für den Spindelträger (124) befestigt ist, und
- einen zweiten Maßstabssensor (26), der mit der Drehung des Spindelträgers fest eingebaut ist, der geeignet ist, mit dem zweiten optischen Maßstab zum Erfassen der axialen Vorrückung des Spindelträgers zusammenzuwirken.

10. Mobile Gruppe nach einem der vorhergehenden Ansprüche, die erste Erfassungsmittel aufweist, die geeignet sind, um die Position eines festen Punkts der Spindel zu erfassen, um die Wärmeverformung dieser Spindel zu erfassen.

11. Mobile Gruppe nach Anspruch 10, die eine Spindelträgerabdeckung (12) umfasst, die abnehmbar mit der Vorderseite des Spindelträgers verbindbar ist, um die Spindelträgeröffnung teilweise zu bedecken, wobei in jedem Fall die Verschiebung dieser Spindel zugelassen wird.

12. Mobile Gruppe nach Anspruch 11, die Mittel zum Erfassen der Verformung der Spindelträgerdabdeckung umfasst.

13. Werkzeugmaschine (1), die eine feste Führung (2) mit einer vorherrschenden Ausdehnung entlang einer Längsrichtung und eine mobile Gruppe, die nach einem der vorhergehenden Ansprüche gefertigt ist, umfasst.

## Revendications

1. Groupe mobile d'une machine-outil comprenant:
- un support de déplacement (4) pouvant être associé à un guide fixe (2) et mobile le long d'une direction longitudinale dudit guide fixe;
- un porte-broche (6) mobile le long d'une direction axiale perpendiculaire à ladite direction longitudinale, ayant un espace interne de porte-broche ouvert sur sa surface avant par une ouverture de porte-broche,
- une broche (8), au moins en partie logée dans ledit espace de porte-broche et supporté pour tourner autour d'un axe de rotation, ladite broche étant raccordée en service au porte-broche de manière à se déplacer le long de ladite direction axiale entre une position en retrait et une position en extension, convenant pour effectuer un usinage, dans laquelle position elle fait saillie à l'avant du porte-broche à travers ladite ouverture de porte-broche plus que dans ladite position en retrait;
- des premiers moyens de mesure (18) convenant pour mesurer l'avancement axial de la broche par rapport au porte-broche, entre une position de référence fixe (14) sur le porte-broche et une référence mobile par rapport au porte-broche et solidaire en déplacement de la broche;
- des seconds moyens de mesure (22) convenant pour mesurer l'avancement axial du porte-broche par rapport au support de déplacement, entre une position de référence fixe (24) sur le support de déplacement et une référence mobile (26) par rapport au support de déplacement et solidaire en déplacement du porte-broche;
- des seconds moyens de détection (28) convenant pour mesurer la déformation thermique du porte-broche entre ladite surface avant du porte-broche et ladite référence mobile (26) par rapport au support de déplacement et solidaire en déplacement du porte-broche;
ledit groupe mobile étant **caractérisé en ce qu'**il comprend en outre:
d'autres moyens de détection convenant pour mesurer la déformation thermique du porte-broche, entre ladite surface avant du porte-broche et ladite position de référence fixe (14) sur le porte-broche.

2. Groupe mobile selon la revendication 1, dans lequel lesdits autres moyens de détection comprennent :
- une autre barre (32) de matériau sensiblement non déformable à la chaleur qui s'étend principalement dans la direction axiale, entre une extrémité avant, fixée sur le porte-broche à proximité de son extrémité avant, et une extrémité arrière, et
- un autre capteur (34), solidaire du porte-broche et convenant pour détecter la distance axiale de ladite extrémité arrière de la barre.

3. Groupe mobile selon la revendication 2, dans lequel ladite extrémité arrière de l'autre barre est alignée avec ladite position de référence fixe des premiers moyens pour mesurer l'avancement de la broche.

4. Groupe mobile selon la revendication 2 ou 3, dans lequel ladite autre barre est fabriquée dans un matériau ayant un coefficient de dilatation thermique inférieur au coefficient de dilatation thermique du matériau dont est fabriqué le porte-broche.

5. Groupe mobile selon la revendication 4, dans lequel ledit coefficient de dilatation thermique du matériau de l'autre barre est inférieur d'un dixième du coefficient de dilatation thermique du matériau du porte-broche.

6. Groupe mobile selon la revendication 5, dans lequel ledit matériau composant de l'autre barre est l'Invar®.

7. Groupe mobile selon l'une quelconque des revendications précédentes, dans lequel lesdits seconds moyens de détection comprennent :
- une barre (28) de matériau sensiblement non déformable à la chaleur qui s'étend principalement dans la direction axiale, entre une extrémité avant, fixée sur le porte-broche à proximité de son extrémité avant, et une extrémité arrière, et
- un capteur de barre (30), solidaire du porte-broche et convenant pour détecter la distance axiale de ladite extrémité arrière de la barre.

8. Groupe mobile selon l'une quelconque des revendications précédentes, dans lequel les premiers moyens de mesure comprennent :
- une première règle optique (18) solidaire en déplacement du porte-broche et fixée sur ledit porte-broche dans une position de règle pour la broche (14), qui constitue ladite position de référence fixe sur le porte-broche, et
- un premier capteur de règle (20) solidaire en déplacement de la broche et convenant pour coopérer avec ladite première règle optique pour détecter l'avancement axial de la broche.

9. Groupe mobile selon la revendication 8, dans lequel lesdits seconds moyens de mesure comprennent :
- une seconde règle optique (22) solidaire en déplacement du support de déplacement et fixée sur ledit support de déplacement dans une position de règle pour le porte-broche (24) et
- un second capteur de règle (26) solidaire en rotation du porte-broche, convenant pour coopérer avec ladite seconde règle optique pour détecter l'avancement axial du porte-broche.

10. Groupe mobile selon l'une quelconque des revendications précédentes, comprenant des premiers moyens de détection convenant pour détecter la position d'un point fixe de la broche afin de déterminer la déformation thermique de ladite broche.

11. Groupe mobile selon la revendication 10, comprenant un couvercle de porte-broche (12) pouvant être associé de manière amovible à l'avant audit porte-broche pour recouvrir en partie ladite ouverture du porte-broche, permettant dans tous cas le déplacement de ladite broche.

12. Groupe mobile selon la revendication 11, comprenant des moyens pour détecter la déformation dudit couvercle du porte-broche.

13. Machine-outil (1) comprenant un guide fixe (2) ayant une extension prévalente le long d'une direction longitudinale et un groupe mobile, réalisé selon l'une quelconque des revendications précédentes.
